# EUROPEAN PATENT SPECIFICATION

(11) **EP 1 561 312 B1**
(45) Date of publication and mention of the grant of the patent: **19.07.2017**
(21) Application number: 03759579.0
(22) Date of filing: 29.09.2003
(51) Int. Cl.: H04L 12/931

(54) **METHOD AND APPARATUS FOR PROCESSING SUPERFRAMES USING AN ARBITRATION SYSTEM**
VERFAHREN UND VORRICHTUNG ZUR BEARBEITUNG VON ÜBERRAHMEN UNTER VERWENDUNG EINES ARBITRATIONSSYSTEMS
PROCEDE ET APPAREIL DE TRAITEMENT DE SUPERTRAMES A L'AIDE D'UN SYSTEME D'ARBITRAGE

(30) Priority: 02.10.2002 US 264082; 02.10.2002 US 264065
(43) Date of publication of application: 10.08.2005
(73) Proprietor: Cisco Technology, Inc., San Jose, CA 95134 (US)
(72) Inventor: KLOTH, Ray, Saratoga, CA 95070 (US); EDSALL, Thomas, James, Cupertino, CA 95014 (US); HANG, SinSin, Saratoga, CA 95070 (US)
(74) Representative: Kazi, Ilya
(86) International application number: PCT/US2003/030765
(87) International publication number: WO 2004/032437

(56) References cited:
- EP-A2- 0 624 015
- WO-A-01/95661
- WO-A1-97/17786
- US-A- 5 982 771
- BOINEPELLI H K ET AL: "An algorithm for burst reservation packet service" GLOBAL TELECOMMUNICATIONS CONFERENCE, 1993, INCLUDING A COMMUNICATIONS THEORY MINI-CONFERENCE. TECHNICAL PROGRAM CONFERENCE RECORD, IEEE IN HOUSTON. GLOBECOM '93., IEEE HOUSTON, TX, USA 29 NOV.-2 DEC. 1993, NEW YORK, NY, USA,IEEE, 29 November 1993 (1993-11-29), pages 893-897, XP010109786 ISBN: 0-7803-0917-0
- SALISBURY C ET AL: "A high speed scheduler/controller for unbuffered banyan networks" COMMUNICATIONS, 1998. ICC 98. CONFERENCE RECORD. 1998 IEEE INTERNATIONAL CONFERENCE ON ATLANTA, GA, USA 7-11 JUNE 1998, NEW YORK, NY, USA,IEEE, US, 7 June 1998 (1998-06-07), pages 645-650, XP010284528 ISBN: 0-7803-4788-9

## Description

### BACKGROUND OF THE INVENTION

### 1. Field of the Invention

The present invention relates to network technology. More particularly, the present invention relates to methods and apparatus for processing packets using an arbitration system.

### 2. Description of the Related Art

In recent years, the capacity of storage devices has not increased as fast as the demand for storage. Therefore a given server or other host must access multiple, physically distinct storage nodes (typically disks). In order to solve these storage limitations, the storage area network (SAN) was developed. Generally, a storage area network is a high-speed special-purpose network that interconnects different data storage devices and associated data hosts on behalf of a larger network of users. However, although a SAN enables a storage device to be configured for use by various network devices and/or entities within a network, data storage needs are often dynamic rather than static.

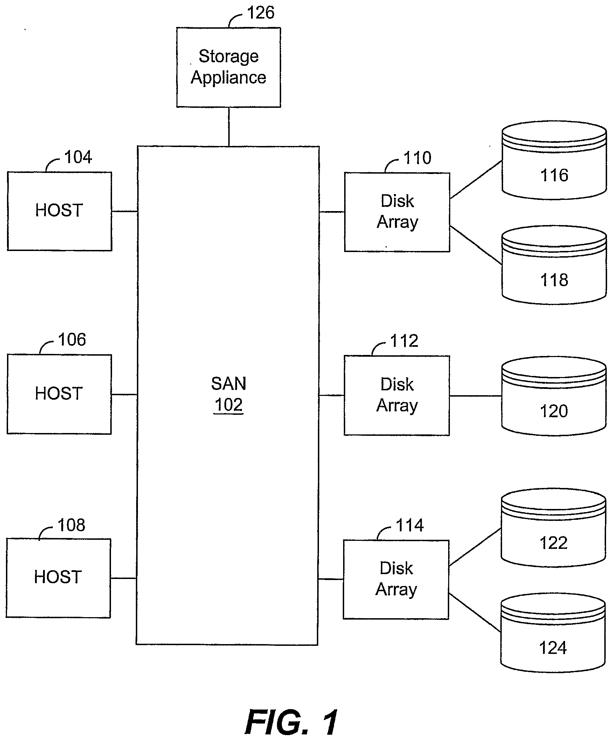

FIG. 1 illustrates an exemplary conventional storage area network. More specifically,within a storage area network 102, it is possible to couple a set of hosts (e.g., servers or workstations) 104, 106, 108 to a pool of storage devices (e.g., disks). In SCSI parlance, the hosts may be viewed as "initiators" and the storage devices may be viewed as "targets." A storage pool may be implemented, for example, through a set of storage arrays or disk arrays 110, 112, 114. Each disk array 110, 112, 114 further corresponds to a set of disks. In this example, first disk array 110 corresponds to disks 116, 118, second disk array 112 corresponds to disk 120, and third disk array 114 corresponds to disks 122, 124. Rather than enabling all hosts 104-108 to access all disks 116-124, it is desirable to enable the dynamic and invisible allocation of storage (e.g., disks) to each of the hosts 104-108 via the disk arrays 110, 112, 114. In other words, physical memory (e.g., physical disks) maybe allocated through the concept of virtual memory (e.g., virtual disks). This allows one to connect heterogeneous initiators to a distributed, heterogeneous set of targets (storage pool) in a manner enabling the dynamic and transparent allocation of storage.

In a network such as a SAN, the speed of transmission of data is particularly important. However, there are a variety of limitations to the speed of data transmission within a network. One such limitation is the number of packets that may be transmitted per second. Moreover, attempting to meet or exceed this limitation may result in congestion within the switch unless the switch is designed to avoid the congestion.

One system commonly used to prevent congestion of packets at output ports within a switch is an arbitration system. During conventional arbitration processes, a packet is received by the switch via one of a plurality of input ports. More specifically, each packet received by the switch is addressed for transmission via one of a plurality of output ports. Rather than automatically forwarding the packets to the appropriate output port as they are received, the arbitrator arbitrates the transmission of packets to prevent congestion at the output ports. Unfortunately, arbitration is typically performed on a per-packet basis. Thus, the arbitration process introduces a substantial delay with the transmission of each packet.

WO 01/95661 discloses a time division multiplexed optical switching system that switches a signal from an ingress port to an egress port. The system comprises an optical switching fabric, ingress and egress line cards and a switch control fabric. The optical switching fabric routes an optical signal from one of M ingress fibers to one of N egress fibers. The switch control fabric allots time slots to the ingress line card for transmitting to the optical switching fabric.

WO 97/17786 discloses a switching system with main buffering means on the input side and a registering arrangement in the switch core for registering the sending status of the inlet units, thereby allowing to set-up connections between the inlet units able to send a packet and the output links able to receive a packet. In view of the above, it would be desirable if the speed of transmission of data within a network such as a storage area network could be increased. Moreover, it would be beneficial if data transmission could be expedited in a switch implementing an arbitrator.

### SUMMARY OF THE INVENTION

The present invention enables data transmission within a switch implementing an arbitrator to be expedited. This is accomplished, in part, through the generation of a frame including multiple packets (or frames). In this manner, the arbitrator manages the transmission of frames rather than single packets.

In accordance with one aspect of the invention, methods and apparatus for transmitting a plurality of packets in a switch having a plurality of input ports and a plurality of output ports are disclosed. Each port may support input port functionality as well as output port functionality. However, for purposes of this application, the term input port and output port are used to refer to these separate functions. Two or more packets (or frames) are received at one or more of the plurality of input ports.
One of the plurality of output ports via which to send each of the two or more packets is identified. A request message is sent to an arbitrator. A grant message is then received from the arbitrator in response to the request message. A frame including the two or more received packets, referred to as a superframe, is generated. The frame is then sent to the one of the plurality of output ports when the grant message is received. Once the frame or associated packets are transmitted via the one of the plurality of output ports, a corresponding available message is sent to the arbitrator indicating that the output port is now capable of receiving the next frame or one or more packets. In other words, the available message indicates the availability of one or more buffers capable of receiving a frame or associated packet(s). For instance, the available message may indicate the availability of one or more buffers capable of receiving a pre-determined number of bytes.

In accordance with another aspect of the invention, the request message is sent immediately upon receipt and/or queueing of a packet. This enables the arbitration process to begin while additional packets may be received and placed in a virtual output queue for subsequent transmission in a superframe. Alternatively, the request message may be sent upon the queueing of two or more packets destined for the same output port. When a grant message is received from the arbitrator, a frame including multiple packets destined for the same output port may be transmitted to the output port. In this manner, transmission of multiple packets may be managed by the arbitrator as well as transmitted by the switch while requiring only a single request and grant message to be processed by the arbitrator. For instance, each request and grant message may correspond to a maximum number of bytes, depending upon output storage resources.

In accordance with yet another aspect of the invention, an arbitrator is used to coordinate the sending of a plurality of packets or frames received at one or more input ports for transmission by one or more output ports. The arbitrator receives one or more request messages from one or more of the input ports, each of the request messages indicating a request to send one or more packets or frames via one of the output ports. For instance, multiple packets or frames maybe sent together in what will be referred to as a "superframe." The arbitrator determines whether the one of the output ports is capable of receiving the one or more packets or frames. For instance, the arbitrator may determine whether a credit is available for the requested output port. A grant message is then generated or sent when it is determined that the one of the output ports is capable of receiving the one or more packets or frames, the grant message indicating that the one of the output ports is capable of receiving the one or more packets or frames.

In accordance with another aspect of the invention, the present invention is implemented on a per-port basis. More particularly, the present invention may be implemented in hardware and/or software dedicated to each port within a switch. In other words, selected ports of one or more network devices may implement the disclosed functionality in hardware and/or software. This allows processing to scale with the number of ports. Accordingly, the present invention provides far greater bandwidth for data transmission than traditional arbitration-based switching schemes as a result of the processing of multiple packets per "available-request-grant" cycle.

Various network devices maybe configured or adapted for intercepting, generating, modifying, and transmitting packets or frames to implement the disclosed functionality. These network devices include, but are not limited to, servers (e.g., hosts), routers, and switches. Moreover, the functionality for the above-mentioned processes may be implemented in software as well as hardware.

Yet another aspect of the invention pertains to computer program products including machine-readable media on which are provided program instructions for implementing the methods and techniques described above, in whole or in part. Any of the methods of this invention may be represented, in whole or in part, as program instructions that can be provided on such machine-readable media. In addition, the invention pertains to various combinations and arrangements of data generated and/or used as described herein. For example, packets and frames having the format described herein and provided on appropriate media are part of this invention.

These and other features of the present invention will be described in more detail below in the detailed description of the invention and in conjunction with the following figures.

### BRIEF DESCRIPTION OF THE DRAWINGS

FIG. 1 is a block diagram illustrating an exemplary conventional storage area network.
FIG. 2 is a timeline illustrating an arbitration mechanism for processing packets within a switch.
FIG. 3 is a block diagram illustrating a storage area network capable of implementing various embodiments of the disclosed switching functions.
FIG. 4 is a block diagram illustrating an exemplary system in which the present invention may be implemented in accordance with various embodiments of the invention.
FIG. 5 is a block diagram illustrating an exemplary switch in which various embodiments of the present invention may be implemented.
FIG. 6 is a diagram illustrating an exemplary packet header that is appended to packets received by a switch in accordance with various embodiments of the invention.
FIG. 7 is a diagram illustrating an exemplary superframe that is generated for transmission to an output port in accordance with various embodiments of the invention.
FIG. 8 is a process flow diagram illustrating a method of processing and transmitting packets received by a switch in accordance with various embodiments of the invention.
FIG. 9 is a diagram illustrating an exemplary arbitration table maintained by an arbitrator such as that described with reference to FIG. 4.
FIG. 10 is a diagram illustrating an exemplary crossbar that maybe connected to multiple line cards that are serviced by an arbitrator in accordance with various embodiments of the invention.
FIG. 11 is a diagram illustrating an input line card sending a list of requests for output ports to an arbitrator in accordance with various embodiments of the invention.
FIG. 12 is a diagram illustrating two different input line cards sending lists of requests for output ports to an arbitrator in accordance with various embodiments of the invention.
FIG. 13 is a diagram illustrating a set of output queues used by an arbitrator to sort requests received from each line card according to output port in accordance with various embodiments of the invention.
FIG. 14 is a process flow diagram illustrating a method of sorting requests into output queues in accordance with various embodiments of the invention.
FIG. 15 is a diagram illustrating a set of credit queues used by an arbitrator to keep track of credits on a per output port basis in accordance with various embodiments of the invention.
FIG. 16 is a diagram illustrating a set of grant queues used by an arbitrator to sort grants in queues on a line card basis prior to sending the grants to the line cards in accordance with various embodiments of the invention.
FIG. 17 is a diagram illustrating a mechanism used by each line card to track requests sent from input ports so that it may process grants received from the arbitrator in the appropriate order in accordance with various embodiments of the invention.
FIG. 18 is a process flow diagram illustrating a method of processing grants received from the arbitrator in a line card in accordance with various embodiments of the invention.

### DETAILED DESCRIPTION OF THE PREFERRED EMBODIMENTS

In the following description, numerous specific details are set forth in order to provide a thorough understanding of the present invention. It will be obvious, however, to one skilled in the art, that the present invention may be practiced without some or all of these specific details. In other instances, well known process steps have not been described in detail in order not to unnecessarily obscure the present invention.

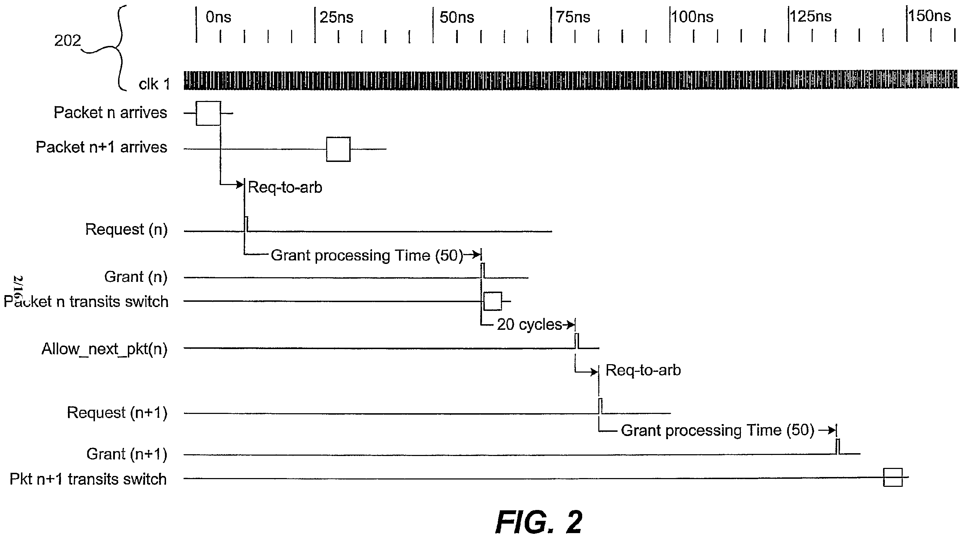

Within a fibre channel network, a number of buffers is typically allocated on a per-port basis at some initial time. Fibre channel credits are then issued according to usage of the assigned buffers. However, such a credit mechanism has not been used in combination with an arbitration mechanism. FIG. 2 is a timeline illustrating an arbitration mechanism that may be used in a network such as a fibre channel network to transmit packets on a per-packet basis. As shown, a timeline 202 illustrates clock cycles in nanoseconds (ns). As shown, when a first packet n arrives at an inbound port of a switch at Ons, a request message is sent to an arbitrator. Similarly, a subsequent packet n+1 arrives at a port of the switch at approximately 30 ns. When the arbitrator receives the request message n for the first packet at approximately 10 ns, it takes approximately 50 ns for the arbitrator to send a grant message to the inbound port indicating that the first packet n may be transmitted within the switch. Soon thereafter, the packet n is transmitted (shown at approximately 60 ns), which may take approximately 20 ns. Once the first packet is transmitted to an outbound port of the switch for transmission, a second request message is sent to the arbitrator at approximately 80 ns. Again, since it takes approximately 50 ns for a grant message to be sent by the arbitrator to the inbound port, the second grant message corresponding to the second packet is sent by the arbitrator at approximately 135 ns. Thus, the second packet n+1 is not sent by the inbound port to the outbound port until approximately 135 ns. Due to the serial nature of the arbitration mechanism with respect to granting requests that it receives, there is an approximately 80ns delay with respect to the transmission of each packet via an outbound port.

In accordance with various embodiments of the invention, an arbitrator is used to prevent congestion at the output ports of the switch. However, rather than arbitrating on a per-packet basis, multiple packets are appended and transmitted in a single frame. In this manner, the delay associated with the transmission of multiple packets by a switch is reduced.

Various embodiments of the invention may be implemented in a network device such as a switch. Note that the frames and/or packets being received and transmitted by such a switch possess the frame format specified for a standard protocol such as Ethernet or fibre channel. Hence, software and hardware conventionally used to generate such frames may be employed with this invention. Additional hardware and/or software is employed to modify and/or generate frames compatible with the standard protocol in accordance with this invention.

The frame is generated by a network device such as a host, switch, or storage device. Obviously, the appropriate network devices should be configured with the appropriate software and/or hardware for performing the disclosed functionality. Of course, all network devices within the storage area network need not be configured with the disclosed functionality. Rather, selected switches and/or ports may be configured with or adapted for the disclosed functionality. Similarly, in various embodiments, such functionality may be enabled or disabled through the selection of various modes. Moreover, it may be desirable to configure selected ports of network devices as ports capable of performing the disclosed functionality, either continuously, or only when in an enabled state.

The standard protocol employed in the storage area network (i.e., the protocol used to frame the data) will typically, although not necessarily, be synonymous with the "type of traffic" carried by the network. As explained below, the type of traffic is defined in some encapsulation formats. Examples of the type of traffic are typically layer 2 or corresponding layer formats such as Ethernet, Fibre Channel, and InfiniBand.

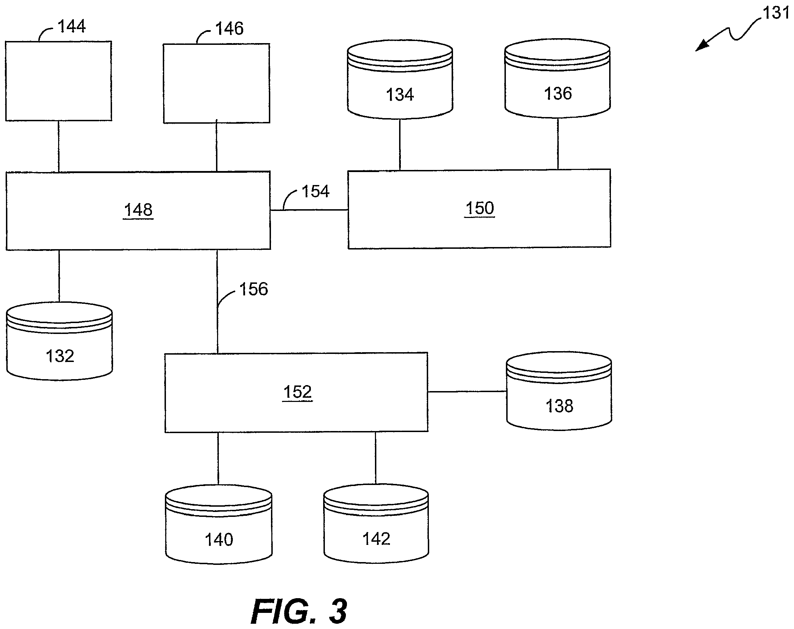

As described above, a storage area network (SAN) is a high-speed special-purpose network that interconnects different data storage devices with associated network hosts (e.g., data servers or end user machines) on behalf of a larger network of users. A SAN is defined by the physical configuration of the system. In other words, those devices in a SAN must be physically interconnected. Within a storage area network 131 such as that illustrated in FIG. 3, various storage devices 132, 134, 136, 138, 140, and 142 maybe implemented, which maybe homogeneous (e.g., identical device types, sizes, or configurations) as well as heterogeneous (e.g., different device types , sizes or configurations). Data may be read from, as well as written to, various portions of the storage devices 132-142 in response to commands sent by hosts 144 and 146. Communication among the storage devices and hosts is accomplished by coupling the storage devices and hosts together via one or more switches, routers, or other network nodes configured to perform a switching function. In this example, switches 148, 150, and 152 communicate with one another via interswitch links 154 and 156.

As indicated above, this invention pertains to data transmission in networks such as storage networks. Although it is possible that the present invention may be implemented within a single switch, multiple switches making up a network fabric may together implement the present invention. Further, various embodiments of this invention are implemented on a per port basis. In other words, a multi-port switch will have the disclosed functionality separately implemented on one or more of its ports. Individual ports have dedicated logic for handing the disclosed functions for packets or frames handled by the individual ports. This allows processing of packets and frames to scale with the number of ports, and provides far greater bandwidth for data transmission than can be provided with traditional arbitration schemes.

In a specific and preferred embodiment of the invention, the disclosed logic is separately implemented at individual ports of a given switch - rather than having centralized processing for all ports of a switch. This allows the processing capacity to be closely matched with the exact needs of the switch on a per port basis. If a central processor is employed for the entire switch (serving numerous ports), the processor must be designed/selected to handle maximum traffic at all ports. For many applications, this represents extremely high processing requirements and a very large/expensive processor. If the central processor is too small, the switch will at times be unable to keep up with the switching demands of the network.

Many storage area networks in commerce run a SCSI protocol to access storage sites. Frequently, the storage area network employs fibre channel (FC-PH (ANSI X3.230-1994, Fibre Channel - Physical and Signaling Interface) as a lower level protocol and runs IP and SCSI on top of fibre channel. Note that the invention is not limited to any of these protocols. For example, fibre channel may be replaced with Ethernet, Infiniband, and the like. Further the higher level protocols need not include SCSI. For example, other protocols may be used by hosts to access storage.

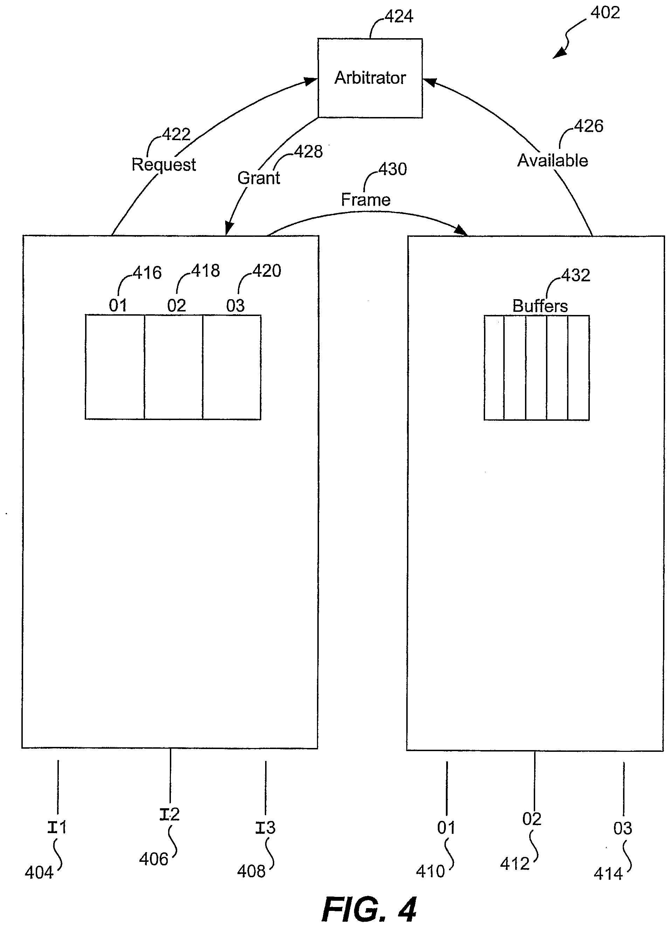

FIG. 4 is a diagram illustrating a system including an arbitrator in which the present invention may be implemented in accordance with various embodiments of the invention. As shown, a switch 402 includes a plurality of input ports (i.e., inbound ports) I1 404, I2 406, I3 408 and a plurality of output ports (outbound ports) O1 410, 02 412, and 03 414. As packets are received at the input ports 404-408, two or more packets received at one or more of the input ports 404-408 may be transmitted together in a single frame to one of the output ports 410-414 or associated software and/or hardware. More specifically, one of the plurality of output ports via which to send the two or more packets is identified. For instance, the selected output port may correspond to the destination IP address identified in the packets. Once two or more packets are identified as corresponding to the same output port, they may be transmitted simultaneously in a single frame for transmission via the output port. For instance, the packets may be stored in a virtual output queue associated with one of the output ports prior to generating the frame. In this example, a separate virtual output queue is associated with each output port O1, O2, O3, as shown at 416, 418, 420. More specifically, in accordance with one embodiment, a separate set of virtual output queues is provided at each input port (not shown to simplify illustration).

In order to send a frame for transmission by one of the output ports, a request message 422 is sent to an arbitrator 424. When the arbitrator 424 receives an available message 426 indicating the ability of an output port to accept one or more packets or frames for transmission, a grant message 428 is sent by the arbitrator 424 to the input port. A frame 430 including the two or more received packets is then generated and sent to the appropriate output port. Alternatively, the frame 430 is preferably generated in whole, or in part, prior to receiving the grant message 428.

When the frame 430 is transmitted, it is stored in an available buffer associated with the appropriate output port. It is important to note that the buffers are a limited resource per output port. Thus, each buffer represents a specified number of bytes to which "ownership" is granted when a request and available message are matched.

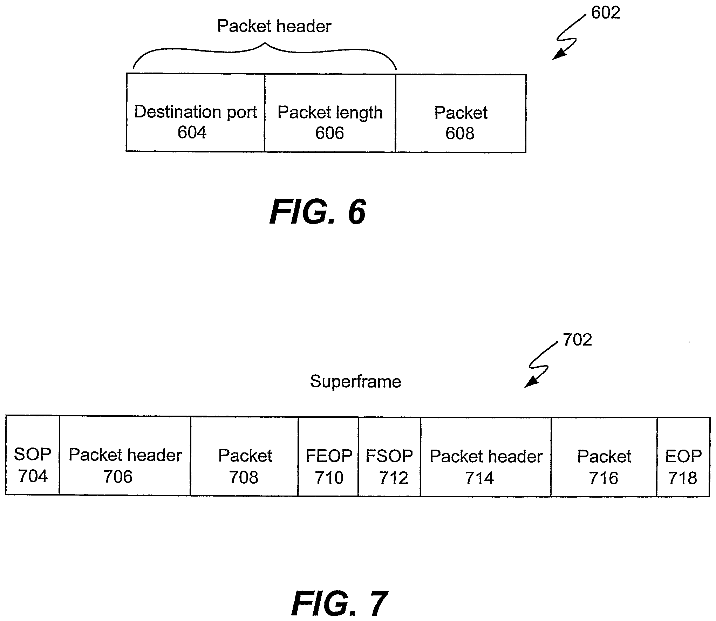

In accordance with one embodiment, a frame is generated by appending two or more packets obtained from a virtual output queue associated with one of the output ports. This frame, referred to as a "superframe," will be described in further detail below with reference to FIG. 7. More specifically, a header is preferably appended to each of these packets indicating one of the plurality of output ports via which to send the packet. Each packet with its appended header may therefore be stored in the appropriate virtual output queue prior to generating the frame.

Communication between the input ports and the arbitrator, and between the arbitrator and the output ports, may be accomplished in a variety of ways. For instance, an available message, request message, and grant message may be implemented through various control lines within one or more line cards. However, this is merely illustrative, and alternate methods of communicating with an arbitrator may be implemented. It is important to note that packets or frames need not be intercepted by the arbitrator, but may be transmitted from an input port to an output port directly. However, in various embodiments, it may be desirable to send the packets or frames to an output port via the arbitrator.

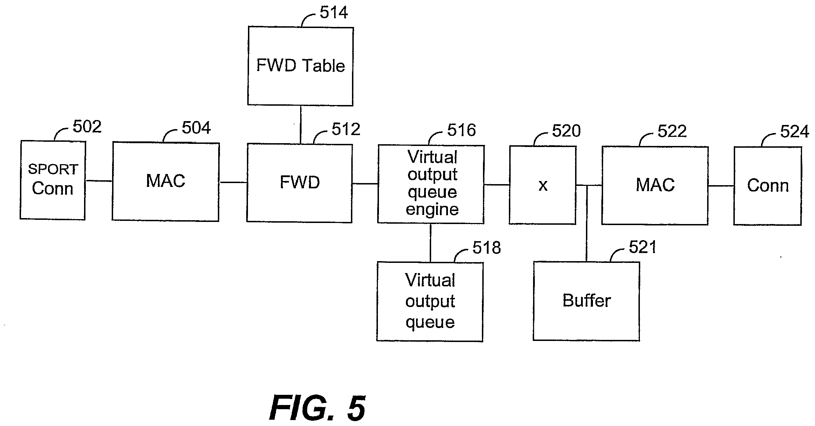

As described above, various switches within a storage area network may be switches supporting the disclosed switching functionality. FIG. 5 is a block diagram illustrating an exemplary switch in which various embodiments of the present invention may be implemented. As shown, data is received by an input port via a bi-directional connector 502. In association with the incoming port, Media Access Control (MAC) block 504 is provided, which enables frames (and packets) of various protocols such as Ethernet or fibre channel to be received. In this example, the frame or packet is received via a bi-directional connector 502 and the new or modified frame, or packet(s), exits from the switch fabric 520. However, it is important to note that a switch may be implemented in an alternate manner. This is important since a host and disk may be connected to a line card such as that illustrated in Fig. 5, as well as share several cards.

The frame or packet is received by a forwarding engine 512, which obtains information from various fields of the frame, such as source address and destination address. The forwarding engine 512 then accesses a forwarding table 514 to determine whether the source address has access to the specified destination address. The forwarding engine 512 also determines the appropriate port of the switch via which to send the frame, and generates an appropriate routing tag for the frame. In one embodiment, the port via which the frame is to be sent is identified in a header that is appended to the packet or frame.

Once the packet or frame is appropriately formatted for transmission, the frame will be received by a buffer queueing block 516, which will be referred to interchangeably as a virtual output queue engine or scheduler, prior to transmission. Rather than transmitting frames or packets as they are received, they are stored temporarily in a buffer or virtual output queue 518, as described above with reference to FIG. 4. In addition, it may be desirable to temporarily store a packet based upon Quality of Service in one of a set of queues that each correspond to different priority levels. Once a frame (i.e., superframe) is generated from one or more received packets or frames obtained from the appropriate virtual output queue 518, the frame is transmitted via switch fabric 520 to the appropriate output port. Specifically, a superframe may be generated from two or more received packets or frames. However, it is important to note that the present invention is opportunistic, and therefore when there is no congestion, the present invention does not wait to receive additional packets or frames to generate the transmitted frame (e.g., superframe). Thus, the frame may be generated from a single packet or frame. In this manner, more equal bandwidth is allocated to multiple sources, thereby achieving fairness in the transmission process. As shown, the outgoing port has its own buffer(s) 521 which may be available for temporary storage of received packets or frames, MAC block 522 and bi-directional connector 524 via which packets obtained from a superframe or the entire superframe may be transmitted. An exemplary superframe will be described in further detail below with reference to FIG. 7.

The above-described functionality is performed in combination with an arbitrator as described above with reference to FIG. 4. For instance, the arbitration functionality may be implemented in a fabric card.

The above-described functionality is preferably performed on a per-port basis rather than per switch. Thus, each switch may have one or more ports that are capable of performing the disclosed functions, as well as ports that are not capable of such functions.

Although the network devices described above with reference to FIG. 5 are described as switches, these network devices are merely illustrative. Thus, other network devices such as routers may be implemented to receive, process, modify and/or generate packets or frames with functionality such as that described above for transmission in a storage area network. Moreover, the above-described network devices are merely illustrative, and therefore other types of network devices may be implemented to perform the disclosed switching functionality.

FIG. 6 is a diagram illustrating a header that may be appended to each packet that is appended within a frame in accordance with various embodiments of the invention. As shown, a packet header 602 preferably identifies the output port (e.g., destination port) 604 via which to send the packet. In addition, in order to enable the packets in the frame to be parsed and sent by the output port, the header 602 also preferably indicates the packet length 606. For instance, the packet length 606 may indicate the number of bits or bytes in the packet. The packet header 602 is appended to the packet 608.

Once received by the output port, the output port may either send the entire frame or parse the packets for separate transmission via the output port. FIG. 7 is a frame that may be transmitted within a switch such as that described above with reference to FIG. 4 and FIG. 5 in accordance with various embodiments of the invention. The frame 702 is referred to herein as a superframe. Each packet with appended header is delineated within the frame by a start indicator and an end indicator. As shown in FIG. 7, a start of packet indicator (SOP) 704 signals the start of the first packet in the superframe 702, as shown at packet header 706 and packet 708 (indicating a packet body). A fake end of packet indicator (FEOP) 710 delineates the end of the first packet. A fake start of packet indicator (FSOP) 712 delineates the start of subsequent packets, including a packet header 714 and packet body 716. An end of packet indicator (EOP) (718) delineates the end of the last packet in the superframe 702.

In order to ensure that the superframe complies with the size of the memory (e.g., buffer) in which the superframe will be stored at the output port, there will typically be a maximum number of packets, or otherwise be a limit to the number of bits or bytes within a superframe. Thus, as two or more packets within a virtual output queue are appended, the sum of the lengths of those packets in bits or bytes may be maintained to ensure that the sum is less than or equal to a pre-defined number of bits or bytes. For instance, a number of packets may be appended to provide a maximum of approximately 1.5 maximum transmission units. It is important to note that the packets transmitted by the switch may include a variety of information or data.

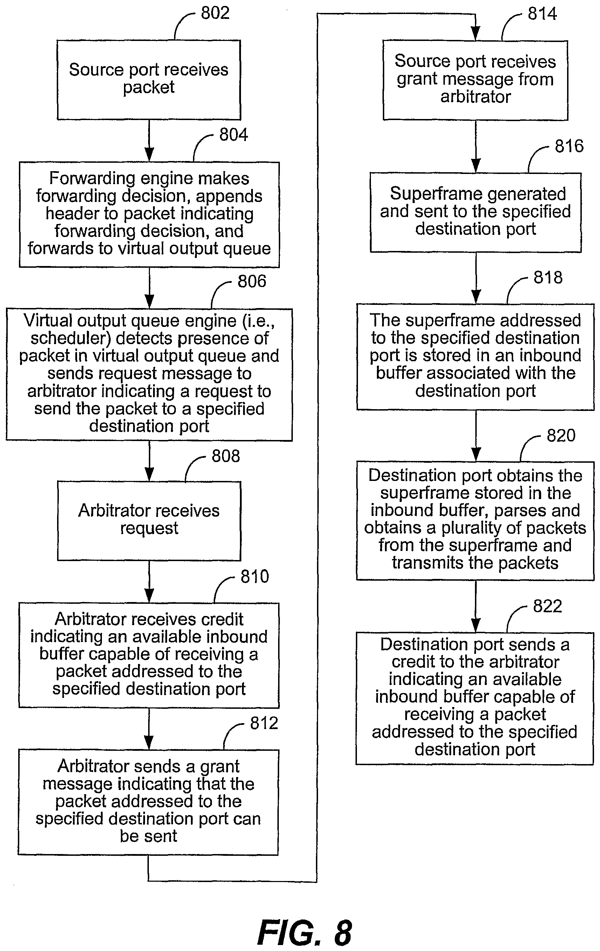

FIG. 8 is a process flow diagram illustrating a method of implementing the present invention within a switch such as that illustrated above with reference to FIG. 4 and FIG. 5 in accordance with various embodiments of the invention. As shown at block 802, a packet is received at one of the plurality of input ports. The forwarding engine then makes a forwarding decision at block 804 to determine which one of the plurality of output ports via which to send the packet. In accordance with various embodiments, a header indicating the forwarding decision is appended (prepended) to the packet, and the packet is forwarded for storage in a virtual output queue. Thus, in this example, the header of each packet in the virtual output queue associated with an output port will identify the output port via which to send those packets (or associated frame(s)). A request message is then sent to an arbitrator at block 806. The request message preferably identifies one of the plurality of output ports. In addition, the request message indicates a request to send a frame or one or more packets to the identified output port. More specifically, the request message may indicate a request to send a frame including two or more packets obtained from the virtual output queue associated with the output port. Thus, the request message indicates a request for an input buffer associated with the output port. In other words, the request message may indicate a request for ownership of the next input buffer until it has stored a superframe in the buffer. For instance, a scheduler or virtual output queue engine may detect the presence of one or more packets in the virtual output queue prior to sending the request message to the arbitrator. Packets at the head of the virtual output queue will preferably be served first. Thus, a packet may wait in the virtual output queue for others to be processed before another request message can be sent. In accordance with a preferred embodiment, a request message is sent after two or more packets are received at one or more of the input ports. For instance, the packets may be detected in the virtual output queue, and therefore be determined to be sent via the same one of the plurality of output ports. Alternatively, it is preferable to send a request message after the first one of the two or more packets is detected in the virtual output queue (e.g., the head of the virtual output queue). In this manner, the arbitrator may process the request while additional packets are received in the virtual output queue for transmission in the frame.

When the arbitrator receives the request at block 808, it waits until it receives an available message (i.e., credit) indicating an available inbound buffer capable of receiving a frame or one or more packets addressed to the output port identified in the request message as shown at block 810. The arbitrator then sends a grant message identifying the output port identified in the request message at block 812. More specifically, the grant message may indicate that a frame of one or more packets addressed to the specified output port can be sent. Of course, if the arbitrator receives the request and it has already previously received a credit, it will send the grant message immediately.

It is important to note that the arbitrator may receive multiple requests associated with the same output port. Thus, in accordance with one embodiment, the arbitrator selects which one of those requests is to be matched with an "available" message based on the order of request message arrival.

When the input port or associated hardware and/or software receives the grant message from the arbitrator at block 814, it generates a superframe such as that described above with reference to FIG. 7 and sends the superframe to the appropriate output port at block 816. As described above, the superframe includes two or more received packets. In order to ensure that the superframe complies with the size of the memory (e.g., buffer) in which the superframe will be stored at the output port, there will typically be a maximum number of packets, or otherwise be a limit to the number of bits or bytes within a superframe. Thus, as two or more packets within a virtual output queue are appended, the sum of the lengths of those packets in bits or bytes may be maintained to ensure that the sum is less than or equal to a pre-defined number of bits or bytes. For instance, a number of packets may be appended to provide a maximum of approximately 1.5 maximum transmission units.

As described above with reference to block 814, in accordance with one embodiment, the superframe is generated after the grant message is received from the arbitrator. Thus, regardless of when the request message is sent, the grant message will trigger the generation of the superframe. However, generation of the frame may also be performed, or begun, before the grant message is received. In other words, the frame may be generated in whole or in part prior to receipt of the grant message. For instance, various packets received in the virtual output queue may be appended as they are received. In other words, once the grant message is received, this may trigger the sending of a frame that has already been generated.

Once the superframe is received by the output port, or associated hardware and/or software, the superframe addressed to the output port is then stored in a buffer associated with the output port at block 818. The frame is then obtained from the buffer and parsed to obtain the two or more packets. For instance, the packet length may be obtained from the header of the packets in the frame in order to parse the frame. The packets are then transmitted via the output port at block 820. The output port then sends an available message (i.e., credit) to the arbitrator at block 822. In this instance, the available message indicates an available buffer capable of receiving a frame (or one or more packets) addressed to the output port.

Although the above-described embodiment is described with reference to obtaining a frame in order to separately transmit two or more packets via an output port, this example is merely illustrative. Thus, the supeframe may also be transmitted via the output port in its entirety. For instance, the superframe may be parsed by another switch receiving the frame, as well as compressed for efficient transmission.

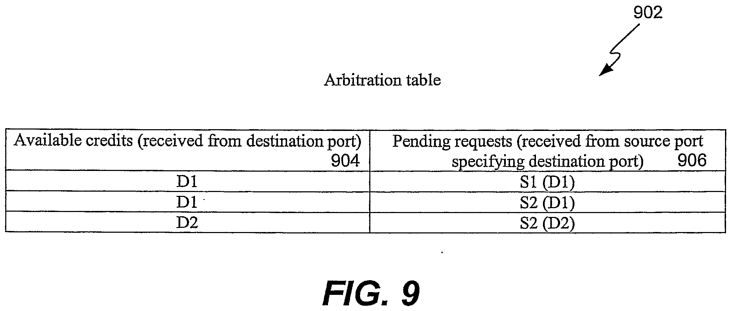

FIG. 9 is a diagram illustrating an exemplary arbitration table that may be maintained by an arbitrator such as that described above with reference to FIG. 4. More specifically, the arbitrator maintains an arbitration table 902 in which available credits 904 (e.g., available message) corresponding to available memory (e.g., buffers) at an output port are tracked. In addition, pending requests 906 (e.g., request message) received from an input port indicating a request for memory in association with a particular output port are also tracked. Since the credits 904 and pending requests 906 may be received in any order, both are maintained. Once a credit 904 is matched to a request 906 (i.e., a credit and request for the same destination port), a grant message may be sent and both the credit 904 and request 906 may be deleted from the arbitration table.

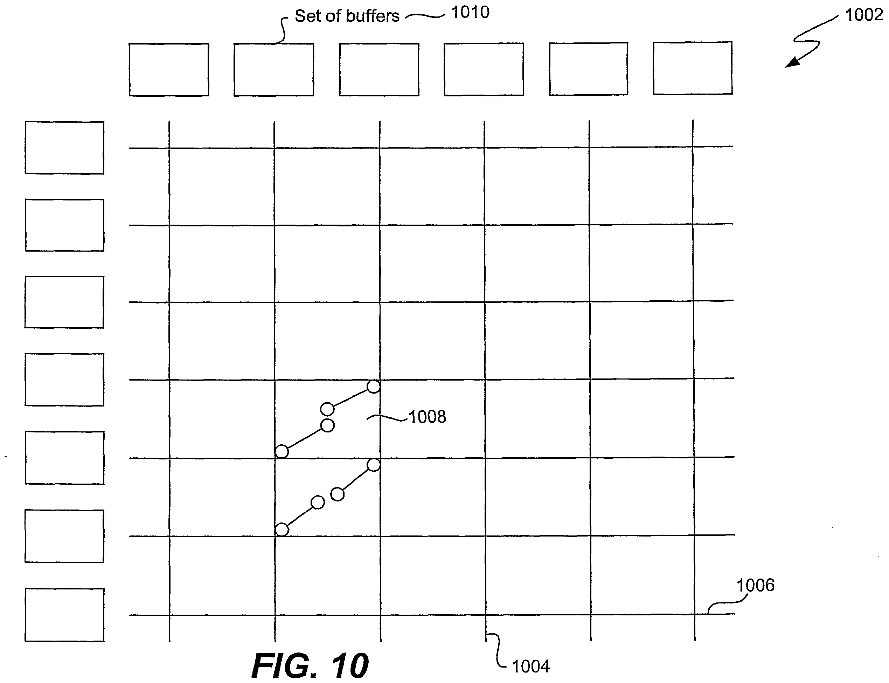

As described above with reference to FIG. 5, one or more line cards maybe coupled to an arbitrator via switch fabric 520 (i.e., cross-bar). FIG. 10 is a diagram illustrating an exemplary cross-bar that may be connected to multiple line cards that are serviced by an arbitrator in accordance with various embodiments of the invention. More specifically, through the cross-bar, input port-output port pairs may be coupled to one another. Similarly, through the cross-bar, input line cards and output line cards may communicate with an arbitrator.

In accordance with one embodiment, the cross-bar is a frame-based buffered cross-bar 1002. As shown, in this example, the buffered cross-bar includes a plurality of vertical bars 1004 and horizontal bars 1006. In addition, the cross-bar 1002 includes a plurality of switches 1008. The switches 1008 are together configured such that any switch may be turned on at a given time. Typically, two inputs cannot be connected simultaneously to the same output. However, this limitation is eliminated with the use of a buffered cross-bar.

A buffered cross-bar includes one or more buffers 1010 at each input and output to the cross-bar 1002. With the use of the buffers 1010, data may be transmitted simultaneously at all inputs until the buffers 1010 at the inputs and outputs are full. The usage of a buffered cross-bar allows the arbitrator to send the grant as soon as possible to match the credit with a request without concern about whether the previous grant has resulted in a packet being sent or not, since the buffer(s) in the cross-bar allows multiple packets to be sent to the same output without blocking. Effectively, one could match the number of credits used by the arbitrator with the size of buffers in the cross-bar. In this manner, the efficiency of traffic through the cross-bar is maximized.

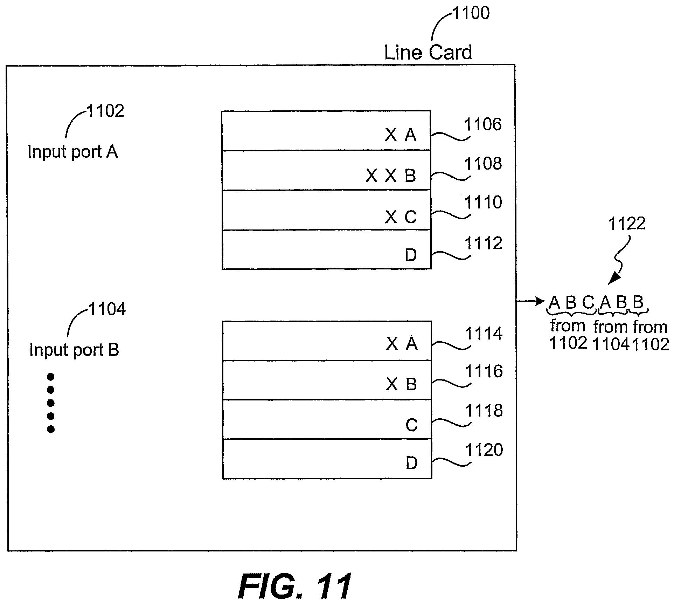

In accordance with various embodiments, request messages sent by the input ports are intercepted by the line card and sent to the arbitrator. For instance, the request messages may be sent in a list to the arbitrator. FIG. 11 is a diagram illustrating an input line card sending a list of requests for output ports to an arbitrator in accordance with various embodiments of the invention. In this example, input line card 1100 includes two input ports, input port A 1102 and input port B 1104. As described above with reference to FIG. 4, each input port has an associated set of virtual output queues corresponding to the output ports. Thus, input port A 1102 has an associated set of virtual output queues 1106-1112 corresponding to the output ports A-D and input port B 1104 has an associated set of virtual output queues 1114-1120 corresponding to the output ports A-D. The line card then sents the request messages 1122 to the arbitrator. As shown, the request messages 1122 may be sent in a list indicating the order in which the request messages 1122 are sent to the arbitrator for processing. Specifically, as shown, requests ABC are sent from input port 1102, requests AB are sent from input port 1104, and request B is sent from input port 1102. As described above, when the arbitrator determines that a credit has been received or is available for the corresponding output port for each request message, it sends a grant message to the line card. The line card may then provide the grant message to the input port and transmit the frame sent by the input port.

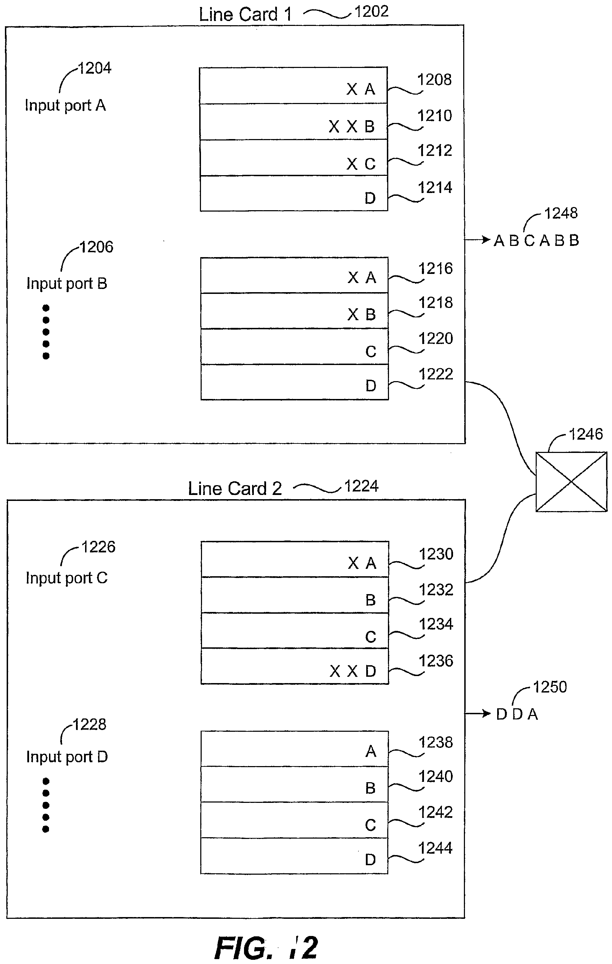

FIG. 12 is a diagram illustrating two different input line cards sending lists of requests for output ports to an arbitrator in accordance with various embodiments of the invention. As described above, multiple input line cards and output line cards are coupled to an arbitrator via a cross-bar. In this example, two different input line cards are coupled to a single cross-bar. Similar to the example illustrated in FIG. 11, a first line card 1202 includes input port A 1204 and input port B 1206. Input port A 1204 has an associated set of virtual output queues 1208-1214 and input port B 1206 has an associated set of virtual output queues 1216-1222. Each set of virtual output queues 1208-1214 and 1216-1222 includes a virtual output queue for each output port A-D, as shown. In this example, line card 1 1202 has four pending requests from input port A and two pending requests from input port B. The first line card 1202 sends a corresponding list of requests 1248 via the cross-bar 1246 to the arbitrator (not shown). The list of request messages may include one or more requests associated with one or more of the input ports, as shown. Thus, the line card sends a list of request messages on behalf of one or more input ports of the line card. As described above, each list of request messages indicates an order in which the associated request messages were sent by the line card to the arbitrator for processing.

A second line card 1224 includes input port C 1226 and input port D 1228. Input port C 1226 has an associated set of virtual output queues 1230-1236 and input port D 1228 has an associated set of virtual output queues 1238-1244. Each set of virtual output queues 1230-1236 and 1238-1244 includes a virtual output queue for each output port A-D, as shown. In this example, line card 2 1224 has three pending requests from input port C and zero pending requests from input port D. The second line card 1224 sends a corresponding list of requests 1250 via the cross-bar 1246 to the arbitrator (not shown). The list of request messages may include one or more requests associated with one or more of the input ports, as shown. Thus, the line card sends a list of request messages on behalf of one or more input ports of the line card. As described above, each list of request messages indicates an order in which the associated request messages were sent by the line card to the arbitrator for processing. In the above description, request messages are generated for each packet and sent to the arbitrator. However, in a preferred embodiment, it is preferable to send a number of request messages that is less than the number of requests (e.g., packets) in the virtual output queues.

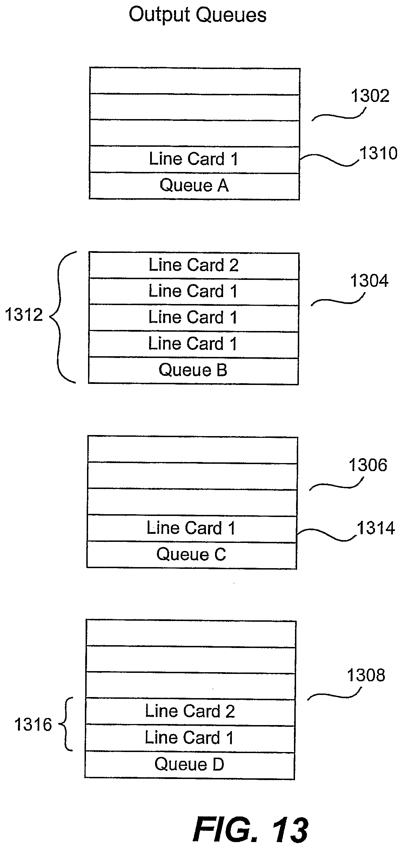

When the arbitrator receives the request messages from the line cards, it preferably stores or tracks these request messages to enable grant messages to be generated and transmitted to the appropriate line cards and/or input ports in the corresponding order. FIG. 13 is a diagram illustrating a set of output queues used by an arbitrator to sort requests received from each line card according to output port in accordance with various embodiments of the invention. The arbitrator maintains a plurality of output queues. Each output queue is associated with one of the output ports. In this example, a first output queue 1302 is associated with output port A, a second output queue 1304 is associated with output port B, a third output queue 1306 is associated with output port C, and a fourth output queue 1308 is associated with output port D.

As shown, each request message is sorted and stored in one of the output queues. For instance, a line card identifier identifying the line card from which the request message was received may be stored in the output queue. In this example, the first output queue 1302 associated with output port A includes a single request message associated with the first line card. The second output queue 1304 associated with output port B includes a set of request messages 1312 including three request messages received from the first line card and one request message received from the second line card. The third output queue 1306 associated with output port C includes a single request message 1314 received from the first line card, while the fourth output queue 1308 associated with output port D includes two requests messages 1316 received from the second line card. Each of the request messages may also identify one of the output ports. Note that the requests are inserted into the queue in the order that they are received from the line cards in order to provide fairness between the line cards. For example, in Queue B 1304, the request from line card 2 is behind the requests from line card 1 because the request from line card 2 arrives later in time.

When the arbitrator determines that the output port is capable of receiving one or more packets or frames for transmission, it generates or sends a grant message. For instance, when the arbitrator receives an available message (e.g., credit) or determines that a credit is available for the output port, it may send a grant message to the line card identified in the output queue. In this manner, grant messages for a given output port may be processed in the order in which request messages were received.

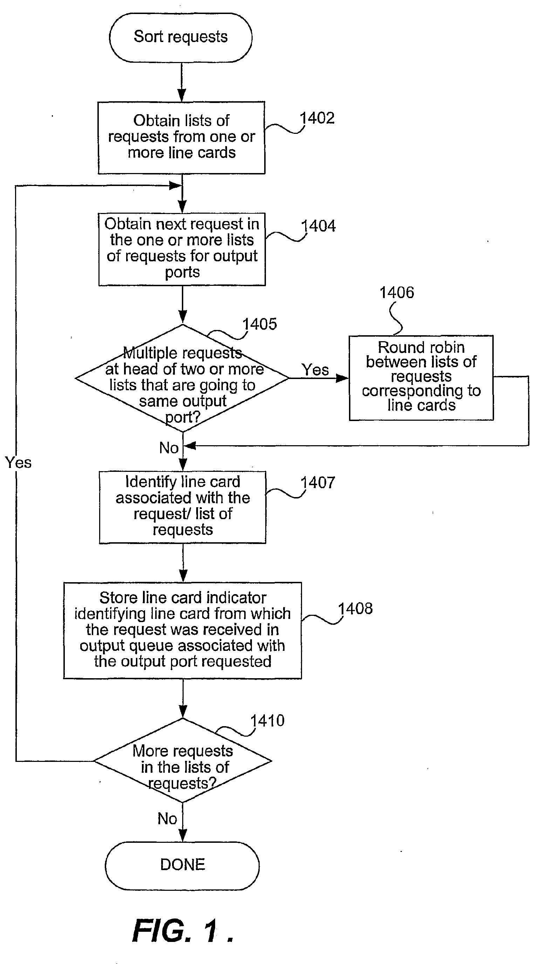

FIG. 14 is a process flow diagram illustrating a method of sorting requests into output queues in accordance with various embodiments of the invention. As described above with reference to FIG. 13, an arbitrator may maintain a plurality of output queues in which requests are sorted according to the output port being requested. More specifically, requests from one or more line cards may be sorted using queues in a manner such as that described above with reference to FIG. 13. As shown at block 1402 the arbitrator receives a list of requests from each line card. In order to obtain fairness between the line cards, in accordance with one embodiment, the present invention round robins between the line cards (and corresponding lists of requests). The next request in the list of requests from all linecards is then obtained at block 1404. In other words, the arbitrator looks at the next request in each of the lists of requests from all of the linecards. If the arbitrator determines at block 1405 that there are multiple requests (e.g., a request at the head of two or more lists) that are going to the same output port, it round robins between the lists/linecards to decide which request to insert in the output queue at block 1406. The line card associated with each request is identified at block 1407. The line card identifier identifying the line card from which the request was received is stored in the output queue associated with the output port requested at block 1408, as shown. Once all of the first elements of each list of requests have been inserted into the appropriate output queue, the arbitrator moves onto the next element. The process is repeated for each request in the lists of requests at block 1410 according to the round robin or other algorithm.

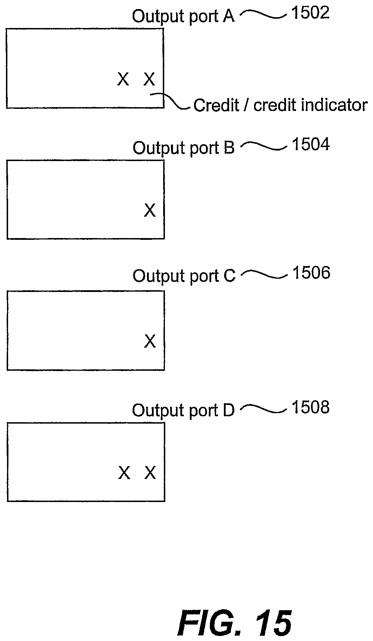

As described above, the arbitrator keeps track of requests and credits for each output port. In this manner, it may determine when a grant may be sent to the requesting input port and/or line card. As described above with reference to FIG. 9, the arbitrator may maintain an arbitration table to keep track of pending requests and available credits that are matched to those requests. FIG. 15 is a diagram illustrating a set of credit queues used by an arbitrator to keep track of credits on a per output port basis in accordance with various embodiments of the invention. Since the arbitrator keeps track of the credits and requests it receives, it may store this information separately or together in lists, queues, tables or other suitable data structures. In this example, credits are stored or tracked in a plurality of credit queues corresponding to the plurality of output ports. More specifically, a first credit queue 1502 associated with output port A stores two credits or credit indicators, while a second credit queue 1504 associated with output port B and a third credit queue 1506 associated with output port C stores one credit or credit indicator. A fourth credit queue 1508 associated with output port D stores two credits or credit indicators. Thus, the arbitrator may update a counter or queue to indicate the number of credits available for a particular output port upon the receipt of a credit. Similarly, the arbitrator may determine whether a credit is available for an output port by checking the appropriate credit queue. When the arbitrator generates and/or transmits a grant message, it deletes or updates the appropriate counter or queue to reflect the usage of a request message and credit.

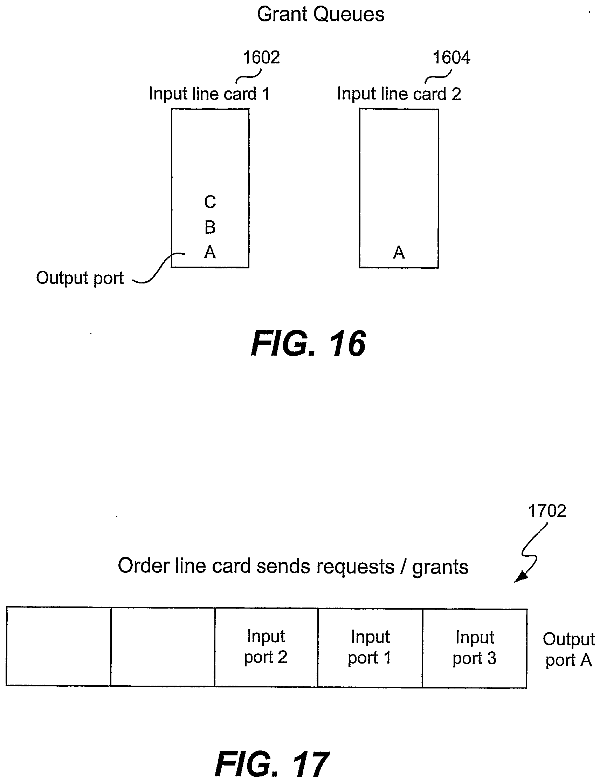

While the arbitrator may transmit a grant message immediately upon generation of the grant message, it may temporarily store the grant messages. FIG. 16 is a diagram illustrating a set of grant queues used by an arbitrator to sort grants in queues on a line card basis prior to sending the grants to the line cards in accordance with various embodiments of the invention. In this example, a first grant queue 1602 is associated with the first input line card while a second grant queue 1604 is associated with the second input line card. Grant messages or grant indicators are stored in the queues in the desired order of transmission to the corresponding line card. As shown, each entry in the queue identifies the output port for which the grant message is provided. The grant messages may be sent separately or in a list. For instance, multiple grant messages may be sent in a single frame to the line card.

FIG. 17 is a diagram illustrating a mechanism used by each line card to track requests sent from input ports so that it may process grants received from the arbitrator in the appropriate order in accordance with various embodiments of the invention. As shown, each line card maintains a list 1702, queue or other data structure for maintaining an order in which the request messages are sent by the line card on behalf of various input ports to the arbitrator. Specifically, a separate list 1702 may be maintained for each output port (e.g., output port A) as shown. Upon receipt of grant messages, the line card may forward the grant messages to the appropriate input ports corresponding to the order in which requests were sent by the line card. In other words, the line card will determine which input port is to receive each grant message and forward the grant message accordingly.

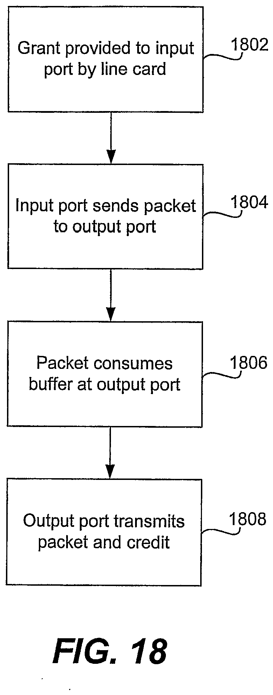

FIG. 18 is a process flow diagram illustrating a method of processing grants received from the arbitrator in a line card in accordance with various embodiments of the invention. As a line card receives a grant message, the line card provides the grant message to the appropriate input port at block 1802, as described above. The input port sends one or more packets or frames at block 1804 to the output port. More specifically, the input port may send multiple packets or frames in the form of a superframe. The superframe consumes one or more buffers at the output port at block 1806. When the output port transmits the superframe, or corresponding packets or frames, it then generates and transmits one or more credits at block 1808. In a preferred embodiment, a single credit is transmitted.

Through the generation and transmission of a superframe within a switch using an arbitration system, it is possible to maximize the amount of data transmitted by a switch while controlling the congestion at the output ports. Accordingly, the throughput of the switch is maximized while minimizing the time delay imposed by an arbitrator.

Although illustrative embodiments and applications of this invention are shown and described herein, many variations and modifications are possible which remain within the concept, scope, and spirit of the invention, and these variations would become clear to those of ordinary skill in the art after perusal of this application. For instance, the present invention is described as being applied to frames. However, it should be understood that the invention is not limited to such implementations, but instead would equally apply to packets as well. In addition, it is possible to support intentional re-ordering of packets and/or frames by attaching a priority to the request, credit, and/or grant messages, which may then be matched with the priority of the packets/frames. Moreover, the present invention would apply regardless of the context and system in which it is implemented. Thus, broadly speaking, the present invention need not be performed using the operations described above, but may be used to support other operations in a network such as a storage area network.

In addition, although an exemplary switch is described, the above-described embodiments maybe implemented in a variety of network devices (e.g., servers) as well as in a variety of mediums. For instance, instructions and data for implementing the above-described invention may be stored on a disk drive, a hard drive, a floppy disk, a server computer, or a remotely networked computer. Accordingly, the present embodiments are to be considered as illustrative and not restrictive, and the invention is not to be limited to the details given herein, but may be modified within the scope and equivalents of the appended claims.

## Claims

1. A method of performing arbitration to coordinate the sending of a plurality of packets or frames received at one or more input ports for transmission by one or more output ports, comprising:
receiving one or more request messages from one or more line cards providing the one or more input ports, each of the request messages identifying one of the input ports and indicating a request to send one or more packets or frames via a specified one of the output ports;
receiving a credit from the specified one of the output ports indicating that one or more buffers are available for receiving the one or more packets or frames;
determining that a credit is available for the specified one of the output ports indicating that one or more buffers associated with the specified one of the output ports are available for receiving the one or more packets or frames; and
generating and sending a grant message to one of the line cards from which the one or more request messages has been received when it is determined that the credit is available for the specified one of the output ports, the grant message indicating that the specified one of the output ports is capable of receiving the one or more packets or frames.

2. The method of claim 1, wherein each of the request messages has a priority associated therewith.

3. The method of either claim 1 or claim 2, wherein the grant message has a priority associated therewith.

4. The method of any preceding claim, wherein the method is performed in a Fibre Channel network and the credit is a Fibre Channel credit.

5. The method of any preceding claim, wherein the credit is regenerated by the specified one of the output ports.

6. The method of any preceding claim, wherein the credit is regenerated by the specified one of the output ports in response to an error condition.

7. The method of any preceding claim, wherein the credit has a priority associated therewith.

8. The method of any preceding claim, further comprising:
storing the grant message in a queue associated with one of the line cards, the grant message identifying the specified one of the output ports identified in one of the request messages.

9. The method of any preceding claim, wherein receiving the one or more request messages from one or more line cards comprises:
receiving one or more sets of request messages from the one or more line cards.

10. The method of claim 9, wherein each of the sets of request messages indicates an order in which the associated request messages were received from the associated line card.

11. The method of either claim 9 or claim 10, further comprising:
storing each of the request messages in the sets of request messages in one of a plurality of queues, each of the plurality of queues being associated with one of the plurality of output ports.

12. The method of any one of claims 9, 10 or 11, further comprising:
storing a line card identifier associated with each request message in the sets of request messages in one of a plurality of queues, each of the plurality of queues being associated with one of the plurality of output ports, the line card identifier identifying the one of the line cards from which the request message was received.

13. A method of transmitting a plurality of packets in a switch, the switch having a plurality of input ports and a plurality of output ports, comprising:
receiving two or more packets or frames at one or more of the plurality of input ports;
identifying one of the plurality of output ports via which to send the packets or frames;
sending a request message to an arbitrator;
performing arbitration in the arbitrator according to the method of any preceding claim;
receiving the grant message from the arbitrator in response to the request message;
generating a data structure including the two or more received packets or frames; and
sending the data structure to the one of the plurality of output ports when the grant message is received.

14. The method of claim 13, further comprising:
repeating the steps of receiving, identifying, and sending for a plurality of request messages such that a plurality of grant messages are received; and
maintaining an order in which the request messages are sent to the arbitrator, and preferably further comprising:
processing the plurality of grant messages in the order in which the request messages are sent to the arbitrator.

15. The method as recited in claim 14, wherein each of the request messages and the grant messages each have a priority associated therewith, the method further comprising:
processing the plurality of grant messages in the order indicated by the priority associated therewith.

16. The method of either claim 14 or claim 15, wherein the order or the request message identifies one of the plurality of input ports from which the request message was sent to the arbitrator, the method further comprising:
sending each of the plurality of grant messages to the corresponding identified input port, thereby enabling the data structure to be sent to the output port.

17. The method as recited in any one of claims 13 to 16, wherein sending the request message is performed after receiving one of the two or more packets or frames at one of the plurality of input ports, preferably wherein the two or more packets or frames are stored in a queue.

18. The method as recited in any one of claims 13 to 17, wherein sending the request message is performed after receiving the two or more packets or frames at one or more of the plurality of input ports.

19. The method as recited in any one of claims 13 to 18, wherein generating a data structure including the two or more received packets or frames is performed after receiving the grant message from the arbitrator.

20. The method as recited in any of claims 13 to 18, wherein generating a data structure including the two or more received packets or frames is performed at least in part before receiving the grant message from the arbitrator.

21. The method as recited in any one of claims 13 to 20, wherein sending the data structure to the one of the plurality of output ports is performed after receiving the grant message from the arbitrator.

22. The method as recited in any one of claims 13 to 21, further comprising:
storing each of the two or more received packets or frames in a virtual output queue associated with one of the plurality of output ports; and
wherein generating the data structure comprises appending the packets or frames in the virtual output queue associated with the one of the plurality of output ports;
preferably wherein the virtual output queue is associated with one of the plurality of input ports and
the method preferably further comprising:
appending a header to each received packet or frame indicating one of the plurality of output ports via which to send the packet or frame, preferably wherein the header of each packet or frame in the virtual output queue associated with one of the plurality of output ports identifies the same one of the plurality of output ports via which to send the packet or frame,
wherein storing each received packet or frame in a virtual output queue comprises storing the received packet or frame with the appended header in the virtual output queue associated with one of the plurality of input ports.

23. The method of claim 22, further comprising:
forwarding the packet or frame with the appended header for storage in the virtual output queue, preferably wherein forwarding the packet or frame with the appended header is performed by a forwarding engine.

24. The method of either claim 22 or claim 23, wherein the header further comprises a length of the packet or frame.

25. The method of any of claims 22 to 24, further comprising:
detecting the presence of one or more packets or frames in the virtual output queue prior to sending the request message to the arbitrator.

26. The method as recited in any of claims 22 to 25, wherein each packet or frame with appended header is delineated within the frame by a start indicator and an end indicator.

27. The method as recited in any of claims 22 to 26, wherein the header of each of the two or more received packets or frames further indicates a length of the packet or frame, and wherein generating a data structure including two or more received packets or frames stored in the virtual output queue comprises:
summing the packet length of each of the two or more received packets or frames to ascertain that the sum is less than or equal to a pre-defined number of bits or bytes, preferably wherein the two or more received packets or frames are appended to provide a maximum of approximately 1.5 transmission units.

28. The method as recited in any one of claims 13 to 27, further comprising:
storing the data structure in a buffer associated with the one of the plurality of output ports.

29. The method of any one of claims 13 to 28, further comprising:
transmitting the data structure at the one of the plurality of output ports, preferably further comprising:
sending an available message to the arbitrator after transmitting the data structure.

30. The method of any one of claims 13 to 29, further comprising:
parsing the data structure to obtain the two or more packets or frames; and
transmitting the two or more packets or frames at the one of the plurality of output ports, preferably further comprising:
sending an available message to the arbitrator after transmitting the data structure and preferably wherein the header of each of the two or more packets or frames indicates a packet length, and wherein parsing the data structure comprises:
obtaining the length from the header of each of the packets or frames in the data structure.

31. The method of any one of claims 13 to 30, further comprising:
storing the data structure in a buffer associated with the one of the plurality of output ports;
obtaining the data structure stored in the buffer;
parsing the data structure to obtain the two or more packets or frames; and
transmitting the two or more packets or frames at the one of the plurality of output ports,
the method preferably further comprising:
sending an available message to the arbitrator, the available message indicating an available buffer capable of receiving a data structure or one or more packets or frames addressed to the one of the plurality of output ports.

32. The method of any one of claims 13 to 31, further comprising:
storing the data structure in a buffer associated with the one of the plurality of output ports;
obtaining the data structure stored in the buffer; and
transmitting the data structure at the one of the plurality of output ports,
the method preferably further comprising:
sending an available message to the arbitrator, the available message indicating an available buffer capable of receiving a data structure or one or more packets or frames addressed to the one of the plurality of output ports.

33. An arbitrator adapted to coordinate the sending of a plurality of packets or frames received at one or more input ports for transmission by one or more output ports, comprising:
means for receiving one or more request messages from one or more line cards providing the one or more input ports, each of the request messages identifying one of the input ports and indicating a request to send one or more packets or frames via a specified one of the output ports;
means for receiving a credit from the specified one of the output ports indicating that one or more buffers are available for receiving the one or more packets or frames;
means for determining that a credit is available for the specified one of the output ports indicating that one or more buffers associated with the specified one of the output ports are available for receiving the one or more packets or frames; and
means for generating and sending a grant message to one of the line cards from which the one or more request messages has been received when it is determined that the credit is available for the specified one of the output ports, the grant message indicating that the specified one of the output ports is capable of receiving the one or more packets or frames.

34. A network device for transmitting a plurality of packets and comprising one or more means for carrying out the method of any one of claims 1 to 32.

35. A network system for transmitting a plurality of packets and comprising one or more means for carrying out the method of any one of claims 1 to 32.

36. A computer program, computer program product or computer-readable medium comprising instructions for performing a method according to any of Claims 1 to 32.

## Patentansprüche

1. Verfahren zum Durchführen von Arbitration zum Koordinieren des Sendens von mehreren Paketen oder Frames, die an einem oder mehreren Eingangsports zur Übertragung durch ein oder mehrere Ausgangsports empfangen werden, das Folgendes beinhaltet:
Empfangen von einer oder mehreren Anforderungsnachrichten von einer oder mehreren Leitungskarten, die die ein oder mehreren Eingangsports bereitstellen, wobei jede der Anforderungsnachrichten einen der Eingangsports identifiziert und eine Anforderung zum Senden von einem oder mehreren Paketen oder Frames über einen vorgegebenen der Ausgangsports anzeigt;
Empfangen eines Kredits von dem vorgegebenen einen der Ausgangsports, der anzeigt, dass ein oder mehrere Puffer zum Empfangen der ein oder mehreren Pakete oder Frames zur Verfügung stehen;
Feststellen, dass ein Kredit für den vorgegebenen einen der Ausgangsports zur Verfügung steht, der anzeigt, dass ein oder mehrere mit dem vorgegebenen einen der Ausgangsports assoziierte Puffer zum Empfangen der ein oder mehreren Pakete oder Frames zur Verfügung stehen; und
Erzeugen und Senden einer Gewährungsnachricht zu einer der Leitungskarten, von denen die ein oder mehreren Anforderungsnachrichten empfangen wurden, wenn festgestellt wird, dass der Kredit für den vorgegebenen einen der Ausgangsports zur Verfügung steht, wobei die Gewährungsnachricht anzeigt, dass der vorgegebene eine der Ausgangsports die ein oder mehreren Pakete oder Frames empfangen kann.

2. Verfahren nach Anspruch 1, wobei mit jeder der Anforderungsnachrichten eine Priorität assoziiert ist.

3. Verfahren nach Anspruch 1 oder Anspruch 2, wobei mit der Gewährungsnachricht eine Priorität assoziiert ist.

4. Verfahren nach einem vorherigen Anspruch, wobei das Verfahren in einem Fiber Channel Netzwerk ausgeführt wird und der Kredit ein Fiber Channel Kredit ist.

5. Verfahren nach einem vorherigen Anspruch, wobei der Kredit durch den vorgegebenen einen der Ausgangsports regeneriert wird.

6. Verfahren nach einem vorherigen Anspruch, wobei der Kredit durch den vorgegebenen einen der Ausgangsports als Reaktion auf einen Fehlerzustand regeneriert wird.

7. Verfahren nach einem vorherigen Anspruch, wobei mit dem Kredit eine Priorität assoziiert ist.

8. Verfahren nach einem vorherigen Anspruch, das ferner Folgendes beinhaltet:
Speichern der Gewährungsnachricht in einer mit einer der Leitungskarten assoziierten Warteschlange, wobei die Gewährungsnachricht den vorgegebenen einen der in einer der Anforderungsnachrichten identifizierten Ausgangsports identifiziert.

9. Verfahren nach einem vorherigen Anspruch, wobei das Empfangen der ein oder mehreren Anforderungsnachrichten von einer oder mehreren Leitungskarten Folgendes beinhaltet:
Empfangen von einem oder mehreren Sätzen von Anforderungsnachrichten von den ein oder mehreren Leitungskarten.

10. Verfahren nach Anspruch 9, wobei jeder der Sätze von Anforderungsnachrichten eine Reihenfolge anzeigt, in der die assoziierten Anforderungsnachrichten von der assoziierten Leitungskarte empfangen wurden.

11. Verfahren nach Anspruch 9 oder Anspruch 10, das ferner Folgendes beinhaltet:
Speichern jeder der Anforderungsnachrichten in den Sätzen von Anforderungsnachrichten in einer aus einer Mehrzahl von Warteschlangen, wobei jede aus der Mehrzahl von Warteschlangen mit einem aus der Mehrzahl von Ausgangsports assoziiert ist.

12. Verfahren nach Anspruch 9, 10 oder 11, das ferner Folgendes beinhaltet:
Speichern einer Leitungskartenkennung, die mit jeder Anforderungsnachricht in den Sätzen von Anforderungsnachrichten in einer aus einer Mehrzahl von Warteschlangen assoziiert ist, wobei jede aus der Mehrzahl von Warteschlangen mit einem aus der Mehrzahl von Ausgangsports assoziiert ist, wobei die Leitungskartenkennung die eine der Leitungskarten identifiziert, von der die Anforderungsnachricht empfangen wurde.

13. Verfahren zum Übertragen einer Mehrzahl von Paketen in einem Switch, wobei der Switch eine Mehrzahl von Eingangsports und eine Mehrzahl von Ausgangsports hat, das Folgendes beinhaltet:
Empfangen von zwei oder mehr Paketen oder Frames an einem oder mehreren aus der Mehrzahl von Eingangsports;
Identifizieren von einem aus der Mehrzahl von Ausgangsports, über den die Pakete oder Frames zu senden sind;
Senden einer Anforderungsnachricht zu einem Arbitrator;
Durchführen von Arbitration in dem Arbitrator gemäß dem Verfahren nach einem vorherigen Anspruch;
Empfangen der Gewährungsnachricht von dem Arbitrator als Reaktion auf die Anforderungsnachricht;
Erzeugen einer Datenstruktur einschließlich der zwei oder mehr empfangenen Pakete oder Frames; und
Senden der Datenstruktur zu dem einen aus der Mehrzahl von Ausgangsports, wenn die Gewährungsnachricht empfangen wird.

14. Verfahren nach Anspruch 13, das ferner Folgendes beinhaltet:
Wiederholen der Schritte des Empfangens, Identifizierens und Sendens für eine Mehrzahl von Anforderungsnachrichten, so dass eine Mehrzahl von Gewährungsnachrichten empfangen wird; und
Halten einer Reihenfolge, in der die Anforderungsnachricht zum Arbitrator gesendet werden, und das ferner vorzugsweise Folgendes beinhaltet:
Verarbeiten der Mehrzahl von Gewährungsnachrichten in der Reihenfolge, in der die Anforderungsnachrichten zum Arbitrator gesendet werden.

15. Verfahren nach Anspruch 14, wobei mit jeder der Anforderungsnachrichten und der Gewährungsnachrichten jeweils eine Priorität assoziiert ist, wobei das Verfahren ferner Folgendes beinhaltet:
Verarbeiten der Mehrzahl von Gewährungsnachrichten in der Reihenfolge, die von der damit assoziierten Priorität angezeigt wird.

16. Verfahren nach Anspruch 14 oder Anspruch 15, wobei die Reihenfolge oder die Anforderungsnachricht einen aus der Mehrzahl von Eingangsports identifiziert, von dem die Anforderungsnachricht zum Arbitrator gesendet wurde, wobei das Verfahren ferner Folgendes beinhaltet:
Senden jeder aus der Mehrzahl von Gewährungsnachrichten zu dem entsprechenden identifizierten Eingangsport, um dadurch das Senden der Datenstruktur zu dem Ausgangsport zu ermöglichen.

17. Verfahren nach einem der Ansprüche 13 bis 16, wobei das Senden der Anforderungsnachricht nach dem Empfangen von einem der zwei oder mehr Pakete oder Frames an einem aus der Mehrzahl von Eingangsports erfolgt, wobei vorzugsweise die zwei oder mehr Pakete oder Frames in einer Warteschlange gespeichert werden.

18. Verfahren nach einem der Ansprüche 13 bis 17, wobei das Senden der Anforderungsnachricht nach dem Empfangen der zwei oder mehr Pakete oder Frames an einem oder mehreren aus der Mehrzahl von Eingangsports erfolgt.

19. Verfahren nach einem der Ansprüche 13 bis 18, wobei das Erzeugen einer Datenstruktur einschließlich der zwei oder mehr empfangenen Pakete oder Frames nach dem Empfangen der Gewährungsnachricht vom Arbitrator erfolgt.

20. Verfahren nach einem der Ansprüche 13 bis 18, wobei das Erzeugen einer Datenstruktur einschließlich der zwei oder mehr empfangenen Paketen oder Frames wenigstens teilweise vor dem Empfangen der Gewährungsnachricht vom Arbitrator erfolgt.

21. Verfahren nach einem der Ansprüche 13 bis 20, wobei das Senden der Datenstruktur zu dem einen aus der Mehrzahl von Ausgangsports nach dem Empfang der Gewährungsnachricht vom Arbitrator erfolgt.

22. Verfahren nach einem der Ansprüche 13 bis 21, das ferner Folgendes beinhaltet:
Speichern jedes der zwei oder mehr empfangenen Pakete oder Frames in einer mit einem aus der Mehrzahl von Ausgangsports assoziierten virtuellen Ausgangswarteschlange; und
wobei das Erzeugen der Datenstruktur das Anhängen der Pakete oder Frames in der mit dem einen aus der Mehrzahl von Ausgangsports assoziierten virtuellen Ausgangswarteschlange beinhaltet;
wobei vorzugsweise die virtuelle Ausgangswarteschlange mit einem aus der Mehrzahl von Eingangsports assoziiert ist, und
wobei das Verfahren vorzugsweise ferner Folgendes beinhaltet:
Anhängen eines Headers an jedes/n empfangene(n) Paket oder Frame, das/der einen aus der Mehrzahl von Ausgangsports anzeigt, über den das Paket oder der Frame zu senden ist, wobei der Header jedes Pakets oder Frame in der mit einem aus der Mehrzahl von Ausgangsports assoziierten virtuellen Ausgangswarteschlange denselben einen aus der Mehrzahl von Ausgangsports identifiziert, über den das Paket oder der Frame zu senden ist,
wobei das Speichern jedes empfangenen Pakets oder Frame in einer virtuellen Ausgangswarteschlange das Speichern des empfangenen Pakets oder Frame mit dem angehängten Header in der mit einem aus der Mehrzahl von Eingangsports assoziierten virtuellen Ausgangswarteschlange beinhaltet.

23. Verfahren nach Anspruch 22, das ferner Folgendes beinhaltet:
Weiterleiten des Pakets oder Frame mit dem angehängten Header zum Speichern in der virtuellen Ausgangswarteschlange, wobei das Weiterleiten des Pakets oder Frame mit dem angehängten Header vorzugsweise durch eine Weiterleitungsmaschine erfolgt.

24. Verfahren nach Anspruch 22 oder Anspruch 23, wobei der Header ferner eine Länge des Pakets oder Frame umfasst.

25. Verfahren nach einem der Ansprüche 22 bis 24, das ferner Folgendes beinhaltet:
Erkennen der Anwesenheit von einem oder mehreren Paketen oder Frames in der virtuellen Ausgangswarteschlange vor dem Senden der Anforderungsnachricht zum Arbitrator.

26. Verfahren nach einem der Ansprüche 22 bis 25, wobei jedes/r Paket oder Frame mit angehängtem Header innerhalb des Frame durch einen Startindikator und einen Endindikator begrenzt wird.

27. Verfahren nach einem der Ansprüche 22 bis 26, wobei der Header von jedem der zwei oder mehr empfangenen Pakete oder Frames ferner eine Länge des Pakets oder Frame anzeigt und wobei das Erzeugen einer Datenstruktur mit zwei oder mehr in der virtuellen Ausgangswarteschlange gespeicherten empfangenen Paketen oder Frames Folgendes beinhaltet:
Summieren der Paketlänge jedes der zwei oder mehr empfangenen Pakete oder Frames, um festzustellen, dass die Summe gleich oder kleiner ist als eine vordefinierte Anzahl von Bits oder Bytes, wobei vorzugsweise die zwei oder mehr empfangenen Pakete oder Frames angehängt werden, um ein Maximum von etwa 1,5 Übertragungseinheiten bereitzustellen.

28. Verfahren nach einem der Ansprüche 13 bis 27, das ferner Folgendes beinhaltet:
Speichern der Datenstruktur in einem mit dem einen aus der Mehrzahl von Ausgangsports assoziierten Puffer.

29. Verfahren nach einem der Ansprüche 13 bis 28, das ferner Folgendes beinhaltet:
Senden der Datenstruktur an dem einen aus der Mehrzahl von Ausgangsports, das ferner vorzugsweise Folgendes beinhaltet:
Senden einer Verfügbarkeitsnachricht zu dem Arbitrator nach dem Senden der Datenstruktur.

30. Verfahren nach einem der Ansprüche 13 bis 29, das ferner Folgendes beinhaltet:
Parsen der Datenstruktur, um die zwei oder mehr Pakete oder Frames zu erhalten; und
Übertragen der zwei oder mehr Pakete oder Frames an dem einen aus der Mehrzahl von Ausgangsports, das ferner vorzugsweise Folgendes beinhaltet:
Senden einer Verfügbarkeitsnachricht zum Arbitrator nach dem Übertragen der Datenstruktur, und wobei der Header jedes der zwei oder mehr Pakete oder Frames vorzugsweise eine Paketlänge anzeigt, und wobei das Parsen der Datenstruktur Folgendes beinhaltet:
Einholen der Länge von dem Header jedes der Pakete oder Frames in der Datenstruktur.

31. Verfahren nach einem der Ansprüche 13 bis 30, das ferner Folgendes beinhaltet:
Speichern der Datenstruktur in einem mit dem einen aus der Mehrzahl von Ausgangsports assoziierten Puffer;
Einholen der im Puffer gespeicherten Datenstruktur;
Parsen der Datenstruktur, um die zwei oder mehr Pakete oder Frames einzuholen; und
Übertragen der zwei oder mehr Pakete oder Frames an dem einen aus der Mehrzahl von Ausgangsports,
wobei das Verfahren vorzugsweise ferner Folgendes beinhaltet:
Senden einer Verfügbarkeitsnachricht zum Arbitrator, wobei die Verfügbarkeitsnachricht einen verfügbaren Puffer anzeigt, der eine Datenstruktur oder ein oder mehrere Pakete oder Frames empfangen kann, die an den einen aus der Mehrzahl von Ausgangsports adressiert sind.

32. Verfahren nach einem der Ansprüche 13 bis 31, das ferner Folgendes beinhaltet:
Speichern der Datenstruktur in einem mit dem einen aus der Mehrzahl von Ausgangsports assoziierten Puffer;
Einholen der im Puffer gespeicherten Datenstruktur; und
Übertragen der Datenstruktur an dem einen aus der Mehrzahl von Ausgangsports,
wobei das Verfahren ferner vorzugsweise Folgendes beinhaltet:
Senden einer Verfügbarkeitsnachricht zum Arbitrator, wobei die Verfügbarkeitsnachricht einen verfügbaren Puffer anzeigt, der eine Datenstruktur oder ein oder mehrere Pakete oder Frames empfangen kann, die an den einen aus der Mehrzahl von Ausgangsports adressiert sind.

33. Arbitrator, ausgelegt zum Koordinieren des Sendens einer Mehrzahl von Paketen oder Frames, die an einem oder mehreren Eingangsports empfangen wurden, zur Übertragung durch ein oder mehrere Ausgangsports, der Folgendes umfasst:
Mittel zum Empfangen von einer oder mehreren Anforderungsnachrichten von einer oder mehreren Leitungskarten, die die ein oder mehreren Eingangsports bereitstellen, wobei jede der Anforderungsnachrichten einen der Eingangsports identifiziert und eine Anforderung zum Senden von einem oder mehreren Paketen oder Frames über einen vorgegebenen einen der Ausgangsports anzeigt;
Mittel zum Empfangen eines Kredits von dem vorgegebenen einen der Ausgangsports, der anzeigt, dass ein oder mehrere Puffer zum Empfangen der ein oder mehreren Pakete oder Frames zur Verfügung stehen;
Mittel zum Feststellen, dass ein Kredit für den vorgegebenen einen der Ausgangsports zur Verfügung steht, der anzeigt, dass ein oder mehrere mit dem vorgegebenen einen der Ausgangsports assoziierten Puffer zum Empfangen der ein oder mehreren Pakete oder Frames zur Verfügung stehen; und
Mittel zum Erzeugen und Senden einer Gewährungsnachricht zu einer der Leitungskarten, von denen die ein oder mehreren Anforderungsnachrichten empfangen wurden, wenn festgestellt wird, dass der Kredit für den vorgegebenen einen der Ausgangsports zur Verfügung steht, wobei die Gewährungsnachricht anzeigt, dass der vorgegebene eine der Ausgangsports die ein oder mehreren Pakete oder Frames empfangen kann.

34. Netzwerkgerät zum Übertragen einer Mehrzahl von Pakete, das ein oder mehrere Mittel zum Ausführen des Verfahrens nach einem der Ansprüche 1 bis 32 umfasst.

35. Netzwerksystem zum Übertragen einer Mehrzahl von Paketen, das ein oder mehrere Mittel zum Ausführen des Verfahrens nach einem der Ansprüche 1 bis 32 umfasst.

36. Computerprogramm, Computerprogrammprodukt und computerlesbares Medium, das Befehle zum Ausführen eines Verfahrens nach einem der Ansprüche 1 bis 32 umfasst.

## Revendications

1. Procédé d'exécution d'un arbitrage pour coordonner l'envoi d'une pluralité de paquets ou de trames reçus au niveau d'un ou de plusieurs ports d'entrée en vue de sa transmission par un ou plusieurs ports de sortie, comprenant
la réception d'un ou de plusieurs messages de requête depuis une ou plusieurs cartes de ligne fournissant les un ou plusieurs ports d'entrée, chacun des messages de requête identifiant l'un des ports d'entrée et indiquant une requête d'envoi d'un ou de plusieurs paquets ou trames par l'intermédiaire d'un port spécifié des ports de sortie ;
la réception d'un crédit depuis le port spécifié des ports de sortie indiquant qu'un ou plusieurs tampons sont disponibles pour recevoir les un ou plusieurs paquets ou trames ;
la détermination qu'un crédit est disponible pour le port spécifié des ports de sortie indiquant qu'un ou plusieurs tampons associés au port spécifié des ports de sortie sont disponibles pour recevoir les un ou plusieurs paquets ou trames ; et
la génération et l'envoi d'un message d'accord à l'une des cartes de ligne à partir de laquelle les un ou plusieurs messages de requête ont été reçus quand il est déterminé que le crédit est disponible pour le port spécifié des ports de sortie, le message d'accord indiquant que le port spécifié des ports de sortie est capable de recevoir les un ou plusieurs paquets ou trames.

2. Procédé selon la revendication 1, dans lequel chacun des messages de requête a une priorité associée.

3. Procédé selon la revendication 1 ou la revendication 2, dans lequel le message d'accord a une priorité associée.

4. Procédé selon l'une quelconque des revendications précédentes, le procédé étant exécuté dans un réseau Fibre Channel et le crédit étant un crédit Fibre Channel.

5. Procédé selon l'une quelconque des revendications précédentes, dans lequel le crédit est régénéré par le port spécifié des ports de sortie.

6. Procédé selon l'une quelconque des revendications précédentes, dans lequel le crédit est régénéré par le port spécifié des ports de sortie en réponse à un état d'erreur.

7. Procédé selon l'une quelconque des revendications précédentes, dans lequel le crédit a une priorité associée.

8. Procédé selon l'une quelconque des revendications précédentes, comprenant en outre :
la mémorisation du message d'accord dans une file d'attente associée à l'une des cartes de ligne, le message d'accord identifiant le port spécifié des ports de sortie identifié dans l'un des messages de requête.

9. Procédé selon l'une quelconque des revendications précédentes, dans lequel la réception des un ou plusieurs messages de requête depuis une ou plusieurs cartes de ligne comprend :
la réception d'un ou de plusieurs ensembles de messages de requête depuis les une ou plusieurs cartes de ligne.

10. Procédé selon la revendication 9, dans lequel chacun des ensembles de messages de requête indique un ordre dans lequel les messages de requête associés ont été reçus depuis la carte de ligne associée.

11. Procédé selon la revendication 9 ou la revendication 10, comprenant en outre :
la mémorisation de chacun des messages de requête dans les ensembles de messages de requête dans l'une d'une pluralité de files d'attente, chacune de la pluralité de files d'attente étant associée à l'un de la pluralité de ports de sortie.

12. Procédé selon l'une quelconque des revendications 9, 10 ou 11, comprenant en outre :
la mémorisation d'un identifiant de carte de ligne associé à chaque message de requête dans les ensembles de messages de requête dans l'une d'une pluralité de files d'attente, chacune de la pluralité de files d'attente étant associée à un port de la pluralité de ports de sortie, l'identifiant de carte de ligne identifiant celle des cartes de ligne à partir de laquelle le message de requête a été reçu.

13. Procédé de transmission d'une pluralité de paquets dans un commutateur, le commutateur ayant une pluralité de ports d'entrée et une pluralité de ports de sortie, comprenant :
la réception de deux ou plusieurs paquets ou trames au niveau d'un ou de plusieurs de la pluralité de ports d'entrée ;
l'identification de l'un de la pluralité de ports de sortie par l'intermédiaire duquel il convient d'envoyer les paquets ou trames ;
l'envoi d'un message de requête à un arbitre ;
l'exécution d'un arbitrage dans l'arbitre conformément au procédé selon l'une quelconque des revendications précédentes ;
la réception du message d'accord depuis l'arbitre en réponse au message de requête ;
la génération d'une structure de données comportant les deux ou plusieurs paquets ou trames reçus ; et
l'envoi de la structure de données au port de la pluralité de ports de sortie quand le message d'accord est reçu.

14. Procédé selon la revendication 13, comprenant en outre :
la répétition des étapes de réception, d'identification et d'envoi pour une pluralité de messages de requête de telle sorte qu'une pluralité de messages d'accord soit reçue ; et
le maintien d'un ordre dans lequel les messages de requête sont envoyés à l'arbitre, et comprenant en outre de préférence :
le traitement de la pluralité de messages d'accord dans l'ordre dans lequel les messages de requête sont envoyés à l'arbitre.

15. Procédé selon la revendication 14, dans lequel chacun des messages de requête et des messages d'accord a chacun une priorité associée, le procédé comprenant en outre
le traitement de la pluralité de messages d'accord dans l'ordre indiqué par leur priorité associée.

16. Procédé selon la revendication 14 ou la revendication 15, dans lequel l'ordre du message de requête identifie l'un de la pluralité de ports d'entrée à partir duquel le message de requête a été envoyé à l'arbitre, le procédé comprenant en outre :
l'envoi de chacun de la pluralité de messages d'accord au port d'entrée identifié correspondant, permettant ainsi l'envoi de la structure de données au port de sortie.

17. Procédé selon l'une quelconque des revendications 13 à 16, dans lequel l'envoi du message de requête est exécuté après la réception de l'un des deux ou plusieurs paquets ou trames au niveau de l'un de la pluralité de ports d'entrée, de préférence dans lequel les deux ou plusieurs paquets ou trames sont mémorisés dans une file d'attente.

18. Procédé selon l'une quelconque des revendications 13 à 17, dans lequel l'envoi du message de requête est exécuté après la réception des deux ou plusieurs paquets ou trames au niveau de l'un ou de plusieurs de la pluralité de ports d'entrée.

19. Procédé selon l'une quelconque des revendications 13 à 18, dans lequel la génération d'une structure de données comportant les deux ou plusieurs paquets ou trames est exécutée après la réception du message d'accord depuis l'arbitre.

20. Procédé selon l'une quelconque des revendications 13 à 18, dans lequel la génération d'une structure de données comportant les deux ou plusieurs paquets ou trames est exécutée au moins en partie avant la réception du message d'accord depuis l'arbitre.

21. Procédé selon l'une quelconque des revendications 13 à 20, dans lequel l'envoi de la structure de données à l'un de la pluralité de ports de sortie est exécuté après la réception du message d'accord depuis l'arbitre.

22. Procédé selon l'une quelconque des revendications 13 à 21, comprenant en outre :
la mémorisation de chacun des deux ou plusieurs paquets ou trames reçus dans une file d'attente de sortie virtuelle associée à l'un de la pluralité de ports de sortie ; et
dans lequel la génération de la structure de données comprend la jonction des paquets ou trames dans la file d'attente de sortie virtuelle associée à l'un de la pluralité de ports de sortie ;
de préférence dans lequel la file d'attente de sortie virtuelle est associée à l'un de la pluralité de ports d'entrée et
le procédé comprenant en outre de préférence :
la jonction d'un en-tête à chaque paquet ou trame reçu indiquant l'un de la pluralité de ports de sortie par l'intermédiaire duquel il convient d'envoyer le paquet ou la trame, de préférence dans lequel l'en-tête de chaque paquet ou trame dans la file d'attente de sortie virtuelle associée à l'un de la pluralité de ports de sortie identifie le même port de la pluralité de ports de sortie par l'intermédiaire duquel il convient d'envoyer le paquet ou la trame,
dans lequel la mémorisation de chaque paquet ou trame reçu dans une file d'attente de sortie virtuelle comprend la mémorisation du paquet ou de la trame reçu avec l'en-tête joint dans la file de sortie virtuelle associée à l'un de la pluralité de ports d'entrée.

23. Procédé selon la revendication 22, comprenant en outre :
le réacheminement du paquet ou de la trame avec l'entête joint en vue de sa mémorisation dans la file d'attente de sortie virtuelle, de préférence dans lequel le réacheminement du paquet ou de la trame avec l'entête joint est exécuté dans un moteur de réacheminement.

24. Procédé selon la revendication 22 ou la revendication 23, dans lequel l'en-tête comprend en outre une longueur du paquet ou de la trame.

25. Procédé selon l'une quelconque des revendications 22 à 24, comprenant en outre :
la détection de la présence d'un ou de plusieurs paquets ou trames dans la file d'attente de sortie virtuelle avant l'envoi du message de requête à l'arbitre.

26. Procédé selon l'une quelconque des revendications 22 à 25, dans lequel chaque paquet ou trame ayant un en-tête joint est délimité dans la trame par un indicateur de début et un indicateur de fin.

27. Procédé selon l'une quelconque des revendications 22 à 26, dans lequel l'en-tête de chacun des deux ou plusieurs paquets ou trames reçus indique en outre une longueur du paquet ou de la trame, et dans lequel la génération d'une structure de données comportant deux ou plusieurs paquets ou trames reçus mémorisés dans la file d'attente de sortie virtuelle comprend :
la somme de la longueur de paquet de chacun des deux ou plusieurs paquets ou trames reçus pour déterminer que la somme est inférieure ou égale à un nombre prédéfini de bits ou d'octets, de préférence dans lequel les deux ou plusieurs paquets ou trames reçus sont joints pour fournir un maximum d'approximativement 1,5 unités de transmission.

28. Procédé selon l'une quelconque des revendications 13 à 27, comprenant en outre :
la mémorisation de la structure de données dans un tampon associé à l'un de la pluralité de ports de sortie.

29. Procédé selon l'une quelconque des revendications 13 à 28, comprenant en outre :
la transmission de la structure de données au niveau de l'un de la pluralité de ports de sortie, comprenant en outre de préférence :
l'envoi d'un message disponible à l'arbitre après la transmission de la structure de données.

30. Procédé selon l'une quelconque des revendications 13 à 29, comprenant en outre :
l'analyse syntaxique de la structure de données pour obtenir les deux ou plusieurs paquets ou trames ; et la transmission des deux ou plusieurs paquets ou trames au niveau de l'un de la pluralité de ports de sortie, comprenant en outre de préférence :
l'envoi d'un message disponible à l'arbitre après la transmission de la structure de données et de préférence dans lequel l'en-tête de chacun des deux ou plusieurs paquets ou trames indique une longueur de paquet, et dans lequel l'analyse syntaxique de la structure de données comprend :
l'obtention de la longueur à partir de l'entête de chacun des paquets ou trames dans la structure de données.

31. Procédé selon l'une quelconque des revendications 13 à 30, comprenant en outre :
la mémorisation de la structure de données dans un tampon associé à l'un de la pluralité de ports de sortie ;
l'obtention de la structure de données mémorisée dans le tampon ;
l'analyse syntaxique de la structure de données pour obtenir les deux ou plusieurs paquets ou trames ; et la transmission des deux ou plusieurs paquets ou trames au niveau de l'un de la pluralité de ports de sortie,
le procédé comprenant en outre de préférence :
l'envoi d'un message disponible à l'arbitre, le message disponible indiquant un tampon disponible capable de recevoir une structure de données ou un ou plusieurs paquets ou trames adressés à l'un de la pluralité de ports de sortie.

32. Procédé selon l'une quelconque des revendications 13 à 31, comprenant en outre :
la mémorisation de la structure de données dans un tampon associé à l'un de la pluralité de ports de sortie ;
l'obtention de la structure de données mémorisée dans le tampon ; et
la transmission de la structure de données au niveau de l'un de la pluralité de ports de sortie,
le procédé comprenant en outre de préférence :
l'envoi d'un message disponible à l'arbitre, le message disponible indiquant un tampon disponible capable de recevoir une structure de données ou un ou plusieurs paquets ou trames adressés à l'un de la pluralité de ports de sortie.

33. Arbitre adapté pour coordonner l'envoi d'une pluralité de paquets ou de trames reçue au niveau d'un ou de plusieurs ports d'entrée en vue de sa transmission par un ou plusieurs ports de sortie, comprenant :
un moyen de réception d'un ou de plusieurs messages de requête depuis une ou plusieurs cartes de ligne fournissant les un ou plusieurs ports d'entrée, chacun des messages de requête identifiant l'un des ports d'entrée et indiquant une requête d'envoi d'un ou de plusieurs paquets ou trames par l'intermédiaire d'un port spécifié des ports de sortie ;
un moyen de réception d'un crédit depuis le port spécifié des ports de sortie indiquant qu'un ou plusieurs tampons sont disponibles pour recevoir les un ou plusieurs paquets ou trames ;
un moyen de détermination qu'un crédit est disponible pour le port spécifié des ports de sortie indiquant qu'un ou plusieurs tampons associés au port spécifié des ports de sortie sont disponibles pour recevoir les un ou plusieurs paquets ou trames ; et
un moyen de génération et d'envoi d'un message d'accord à l'une des cartes de ligne à partir de laquelle les un ou plusieurs messages de requête ont été reçus quand il est déterminé que le crédit est disponible pour le port spécifié des ports de sortie, le message d'accord indiquant que le port spécifié des ports de sortie est capable de recevoir les un ou plusieurs paquets ou trames.

34. Dispositif de réseau pour transmettre une pluralité de paquets et comprenant un ou plusieurs moyens pour exécuter le procédé selon l'une quelconque des revendications 1 à 32.

35. Système de réseau pour transmettre une pluralité de paquets et comprenant un ou plusieurs moyens pour exécuter le procédé selon l'une quelconque des revendications 1 à 32.

36. Programme informatique, produit de programme informatique ou support lisible par ordinateur comprenant des instructions pour exécuter un procédé selon l'une quelconque des revendications 1 à 32.
